Europäisches Patentamt

European Patent Office

Office européen des brevets

(11) Veröffentlichungsnummer: **0 233 340 B1**

## (12) EUROPÄISCHE PATENTSCHRIFT

(45) Veröffentlichungstag der Patentschrift: **16.10.91**

(51) Int. Cl.⁵: **A01F 25/20**

(21) Anmeldenummer: **86116940.7**

(22) Anmeldetag: **05.12.86**

(54) Gerät zum Verteilen von Futterballen aus Flachsilos.

(30) Priorität: **20.02.86 DE 3605453**

(43) Veröffentlichungstag der Anmeldung:
**26.08.87 Patentblatt 87/35**

(45) Bekanntmachung des Hinweises auf die
Patenterteilung:
**16.10.91 Patentblatt 91/42**

(84) Benannte Vertragsstaaten:
**AT BE DE FR GB NL**

(56) Entgegenhaltungen:
**AT-B- 320 330      DE-A- 1 456 911**
**DE-A- 2 204 832      DE-A- 2 712 204**
**DE-A- 3 403 374      GB-A- 2 026 978**
**US-A- 4 370 924**

(73) Patentinhaber: **B. Strautmann & Söhne GmbH**
**& Co.**
**Bielefelder Strasse 53**
**W-4518 Bad Laer 1(DE)**

(72) Erfinder: **Strautmann, Bernhard**
**Müschener Strasse 4**
**W-4518 Bad Laer(DE)**
Erfinder: **Steffens, Josef**
**Ravensburger Weg 13**
**W-4834 Harsewinkel(DE)**

(74) Vertreter: **Loesenbeck, Karl-Otto, Dipl.-Ing. et**
**al**
**Jöllenbecker Strasse 164**
**W-4800 Bielefeld 1(DE)**

## Beschreibung

Die Erfindung betrifft ein Gerät zum Verteilen von Futterballen aus Flachsilos in der Ausgestaltung nach dem Oberbegriff des Patentanspruches 1 oder des unabhängigen Patentanspruches 2.

Geräte dieser Art sind in verschiedenen, Ausführungen bekannt. Eines dieser Geräte (nach DE-A- 27 12 204) arbeitet mit einer Fräsvorrichtung, deren an der Unterseite mit Fräszinken versehenen horizontalen Träger mittels zweier synchron umlaufender Kurbelwellen angetrieben werden. Hierbei ist durch die kreisrunde Förderbewegung der Förderweg des Futters relativ kurz und dadurch die Abladegeschwindigkeit langsam. Das Futter entweicht nicht schnell genug, es kommt zu Verstopfungen.

Der vorliegenden Erfindung liegt die Aufgabe zugrunde, ein Gerät der gattungsgemäßen Art so zu gestalten, daß die Eingriffslänge der Fräszinken und der Schubweg des Futters verlängert ist.

Erfindungsgemäß besteht eine Lösung dieser Aufgabe darin, daß die Werkzeugrahmen längs verschiebbar in Koppeln angeordnet, die Koppeln von den Kurbeln getragen und die Werkzeugrahmen längs der Koppeln mittels einer weiteren Kurbel sowie hieran angeschlossener Schubstangen antreibbar sind.

Erfindungsgemäß besteht eine weitere Lösung dieser Aufgabe darin, daß die Kurbelenden der Kurbeln mit Lagerungen zur Aufnahme je einer weiteren Kurbel versehen sind, welche von einem Kettentrieb mit einem feststehenden Sonnenrad und einem umlaufenden Planetenrad gesteuert sind und deren Koppeln die Werkzeugrahmen bilden.

In beiden Fällen wird eine Änderung der kreisrunden Bewegungsbahn der Fräszinken in eine gestreckte, ovale bzw. ellipsenförmige Bewegungsbahn und damit eine Verlängerung der Eingriffsstrecke der Fräszinken und des Schubweges des Futters erreicht.

Dieses Problem existiert in der Landwirtschaft allerdings nicht nur bei Geräten zum Verteilen von Futterballen aus Flachsilos, sondern auch z.B. bei Fördervorrichtungen für landwirtschaftliches Gut sowie bei Zuführungsvorrichtungen in Ballenpressen, s. beispielsweise die US-A-43 70 924, bei der lockeres Futter wie beispielsweise Stroh oder Heu mittels auf einer langgestreckten Bewegungsbahn geführten Förderzinken in einen Preßkanal gefördert wird.

Die Kombination der Merkmale der beiden unabhängigen Patentansprüche 1 und 2 sind aber aus diesem Stand der Technik weder bekannt noch wird sie durch ihn nahegelegt.

Mit der Erfindung wird der Vorteil erzielt, daß sich durch einen langgestreckten kurvenförmigen Einsatz der Fräszinken ein weiterer kraftsparender Lauf des Gerätes erreicht und durch zwei um 180° versetzte Werkzeugrahmen der Abwurf ebenfalls wesentlich verbessert wird.

Der Aufbau und die Wirkungsweise der Erfindung werden nachstehend beschrieben und in den Zeichnungen dargestellt.

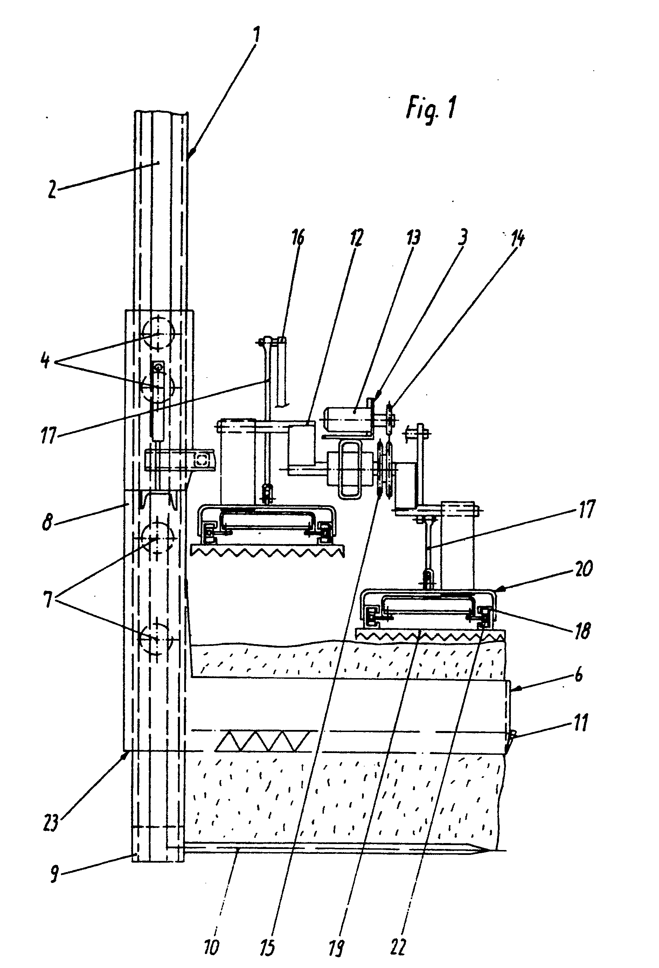

Fig. 1 zeigt eine Seitenansicht des Gerätes.

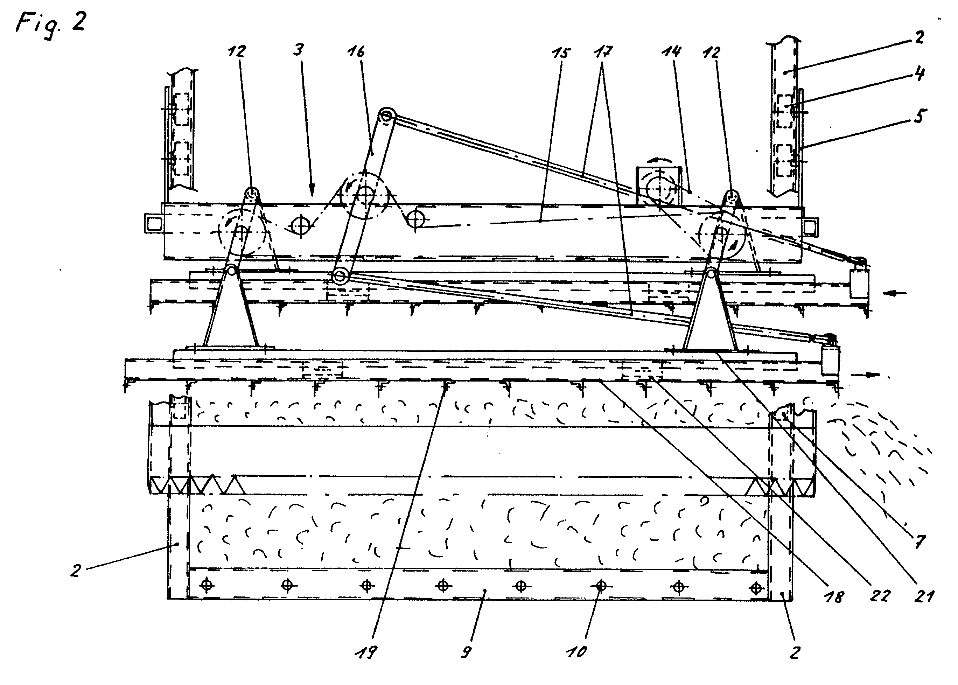

Fig. 2 zeigt eine Rückansicht des Gerätes.

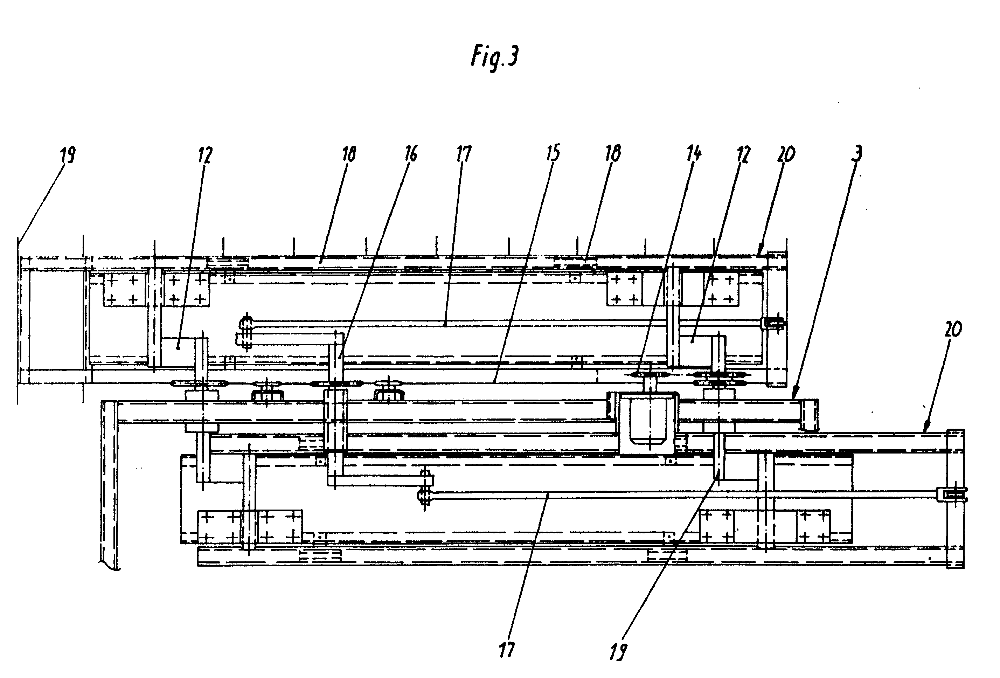

Fig. 3 zeigt eine Draufsicht.

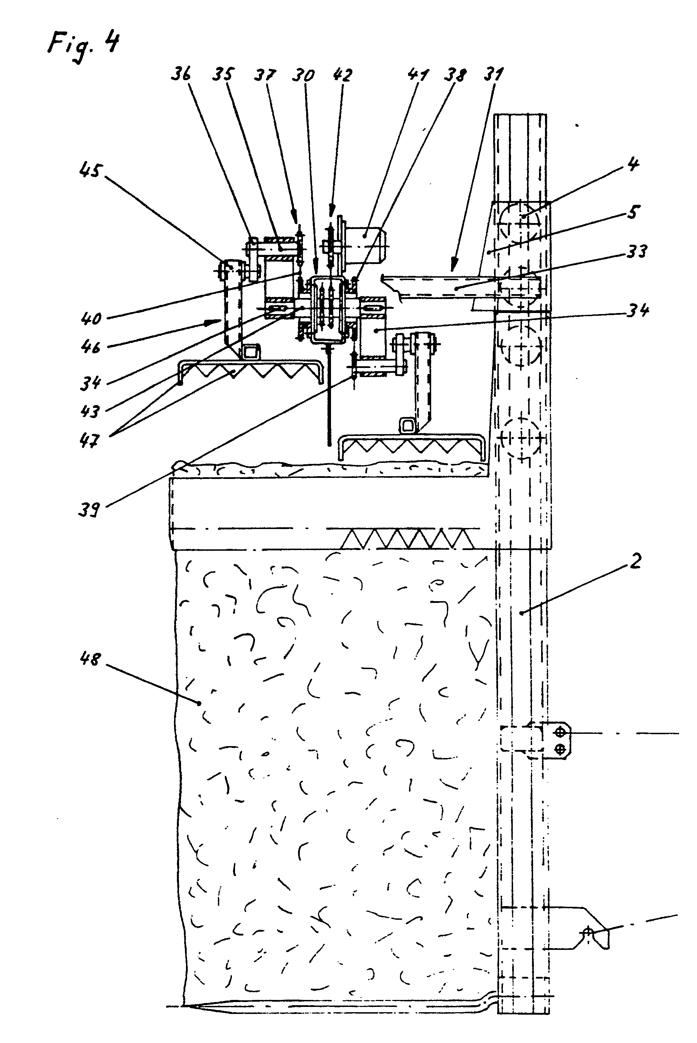

Fig. 4 zeigt die Seitenansicht zu einer weiteren Ausführung.

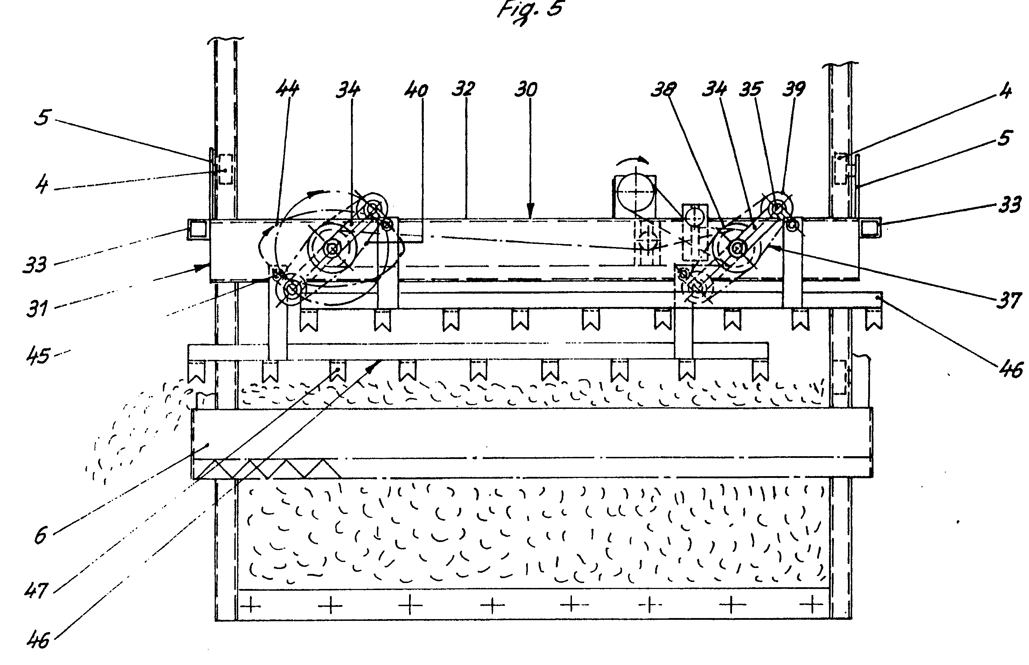

Fig. 5 zeigt die Rückansicht zu Fig. 4.

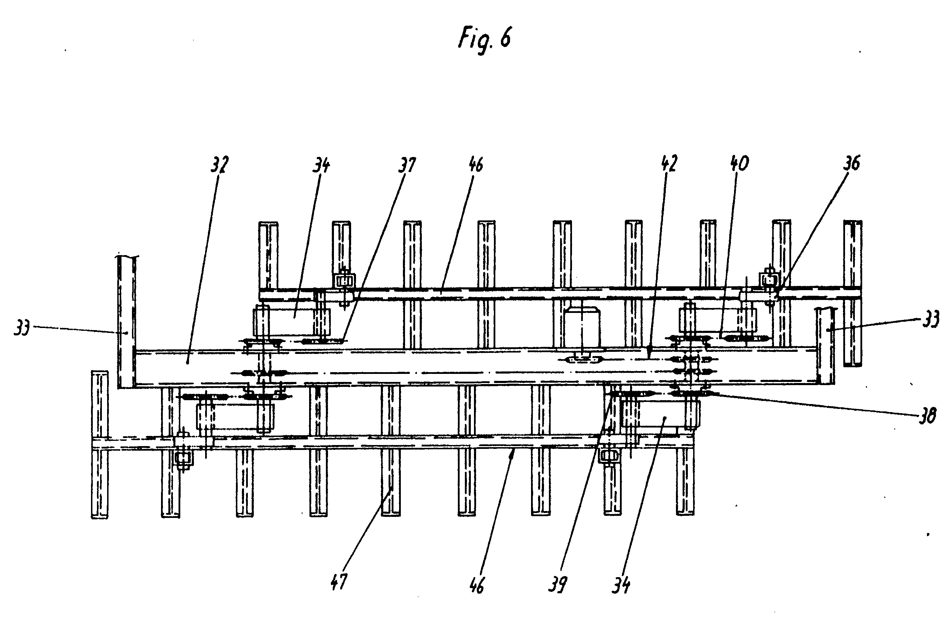

Fig. 6 zeigt eine Draufsicht zu Fig. 4.

Das Gestell 1) eines an einen Schlepper anbringbaren Flachsiloentnahmegerätes 23) nimmt in seinen vertikalen Führungsholmen 2) eine Fräsvorrichtung 3) zum Verteilen von Futterballen 48), welche durch Rollen 4) und deren Rollenhalter 5) getragen wird, auf. Die ebenfalls zum Flachsiloentnahmegerät 23) gehörende, in Rollen 7) vertikal verschiebbare Schneidvorrichtung 6), trägt auf ihren Rollenhaltern 8) die hierauf mit den Rollenhaltern 5) aufliegende Fräsvorrichtung 3).

Vor dem Einstoßen der am Zinkentragrohr 9) angebrachten Zinken 10) in das Futter befinden sich Schneidvorrichtung 6) und Fräsvorrichtung 3) oberhalb des Flachsilos. Beim Ausschneiden von quaderförmigen Futterballen wird die Schneidvorrichtung 6) mit den waagerecht oszillierenden Messern 11) bis in Bodennähe gebracht, die Fräsvorrichtung 3) zum Verteilen des Futterballens wird in einer oberen Stellung festgehalten oder legt sich, wie allgemein ausgeführt, auf das Futter auf.

Zu Beginn des Futterverteilens wird die Schneidvorrichtung 6) soweit nach oben verschoben, daß sich die Fräsvorrichtung 3) vom Futter abhebt. Die Kurbelwellen 12) werden hier über einen Hydromotor 13) und den Kettentrieb 14) in Betrieb gesetzt. Ein weiterer Kettentrieb 15) unterstützt den synchronen Lauf der Kurbeln 12) und treibt außerdem eine weitere Kurbel 16) an, von welcher über Schubstangen 17) ein mit Führungsschienen 18) und mit Fräswerkzeugen 19) bestückter Werkzeugrahmen 20) gegenüber der verkröpften Koppel 21) verschoben wird, wobei an der Koppel 21) befestigte Gleitstücke 22) in den Führungsschienen 18) gleiten und eine langgestreckte waagerechte Bewegungsbahn erzeugen. Diese Wirkungsweise kann in ähnlicher Weise erzeugt werden, wenn die Kurbel 16) durch einen schwenkbaren Hebel ersetzt wird.

In einer weiteren Ausführung wird die Fräsvorrichtung 30) mit dem Rahmengestell 31) ebenfalls in Rollen 4) und Rollenhaltern 5) oberhalb der Schneidvorrichtung 6) vertikal verschiebbar in den Führungsholmen 2) aufgenommen. Das Rahmengestell 31) besteht im wesentlichen aus einem Träger 32), den Seitenholmen 33) und den Rollenhaltern 5). Im Träger 32) sind gleichsinnig parallel umlaufende Kurbeln 34) gelagert, wobei linke u. rechte Seite 180° zueinander versetzt sind.

Am Kurbelende der Kurbeln 34) befinden sich Lagerungen 35), die eine weitere Kurbel 36) aufnehmen. Bei rotierender Kurbel 34) wird die Kurbel 36) durch eine Kettensteuerung 37), bestehend aus Sonnenrad 38),Planetenrad 39) u. Kette 40) zwangsgesteuert. Ein Sonnenrad 38) ist jeweils konzentrisch zur Lagerung der Kurbel 34) am Träger 32) fest verbunden, d.h., es dreht sich nicht. Am rotierenden Lagerzapfen der Kurbel 36) ist ein Planetenrad 39) befestigt, das von einer Kette 40) umschlungen wird.

Werden nun die Kurbeln 34) von dem Hydromotor 41) über den Kettentrieb 42) auf die Kurbelachse 43) angetrieben, so ergibt sich zwangsläufig bei einem Übersetzungsverhältnis zwischen Sonnenrad 38) und Planetenrad 39) von 2 : 1, eine ellipsenförmige Kurvenbahn 44) der Kurbelzapfen 45).An diesen Kurbelzapfen 45) ist eine Koppel als Werkzeugrahmen 46) zwischen den zugeordneten parallelen Kurbeln 34) gelagert. Der Werkzeugrahmen 46) ist nach unten versetzt, er ist an der Unterseite mit Fräszinken 47) bestückt, die durch ihre ellipsenförmige Bewegung das Futter des Futterballens 48) an dessen Oberseite abfräsen.

## Patentansprüche

1. Gerät zum Verteilen von Futterportionen aus Flachsilos, bestehend aus einem an der Dreipunkthydraulik oder einer Frontladerschwinge eines landwirtschaftlichen Schleppers anbaubarem Gestell (1) mit einer am unteren Ende angebrachten Zinkengabel (10), einer über der Zinkengabel (10) angeordneten, senkrecht verschiebbaren, U-förmigen Schneidvorrichtung und einer oberhalb der Schneidvorrichtung (10) angeordneten, ebenfalls senkrecht auf-und abbewegbaren Fräsvorrichtung (3), die mittels rotierender, paralleler Kurbelwellen (12) Werkzeugrahmen (20) mit an der Unterseite angebrachten Fräszinken (19) trägt, wobei die Kurbelwellen (12) gleichsinnig umlaufen, **dadurch gekennzeichnet,** daß die Werkzeugrahmen (20) längs verschiebbar in Koppeln (21) angeordnet, die Koppeln (21) von den Kurbelwellen (12) getragen werden und die Werkzeugrahmen (20) längs der Koppeln (21) mittels einer weiteren Kurbel (16) sowie hieran angeschlossener Schubstangen (17) antreibbar sind und die kreisrunde Bewegungsbahn der Kurbelwellen (12) in eine langgestreckte Kurvenbahn der Fräszinken (19) umgewandelt wird.

2. Gerät zum Verteilen von Futterportionen aus Flachsilos, bestehend aus einem an der Dreipunkthydraulik oder einer Frontladerschwinge eines landwirtschaftlichen Schleppers anbaubarem Gestell (1) mit einer am unteren Ende angebrachten Zinkengabel (10), einer über der Zinkengabel (10) angeordneten, senkrecht verschiebbaren, U-förmigen Schneidvorrichtung (6) und einer oberhalb der Schneidvorrichtung (6) angeordneten, ebenfalls senkrecht auf- und abbeweglichen Fräsvorrichtung (13), die mittels rotierender, paralleler Kurbelwellen (34) Werkzeugrahmen (46) mit an der Unterseite angebrachten Fräszinken (47) trägt, wobei die Kurbelwellen (34) gleichsinnig umlaufen, dadurch gekennzeichnet, daß an beiden Kurbelenden jeder Kurbelwelle (34) je eine weitere Kurbel (36) über Lagerungen (35) angeschlossen ist, wobei die Kurbeln (36) jeweils von einem Kettentrieb (37) mit einem konzentrisch zur Lagerung der Kurbelwelle (34) angeordneten, feststehenden Sonnenrad (38) und einem am rotierenden Lagerzapfen der Kurbel (36) befestigten Planetenrad (39) umschlungenen Kette (40) gesteuert sind und daß die Kurbelzapfen (45) der Kurbeln (36) der einander zugeordneten Kurbelwellen (34) über die Werkzeugrahmen (46) miteinander gekoppelt sind und daß die kreisrunde Bewegungsbahn der Kurbelwellen (34) in eine langgestreckte Kurvenbahn der Fräszinken (47) umgewandelt wird.

3. Gerät nach Anspruch 1, dadurch gekennzeichnet, daß die Kurbel (16) ein schwenkbarer Hebel ist.

4. Gerät nach Anspruch 2, dadurch gekennzeichnet, daß das feststehende Sonnenrad (38) doppelt so groß ist wie das umlaufende Planetenrad (39).

5. Gerät nach Anspruch 4, dadurch gekennzeichnet, daß der Kettentrieb (37) durch einen Zahnradtrieb aus drei Zahnrädern ersetzt ist.

## Claims

1. Apparatus for distributing portions of fodder from flat silos comprising a support structure (1) which can be mounted to the three-point hydraulic system or a front loader arm of an agricultural tractor and having a pronged fork (10) mounted at the lower end, a vertically displaceable, U-shaped cutting device arranged above the pronged fork (10) and a milling device (3) which is arranged above the cutting device (10) and which can also be moved vertically up and down and which by means of rotating parallel crank shafts (12) carries implement frames (20) with milling prongs (19) mounted at the underside, wherein the crank shafts (12) rotate the same direction, characterised in that the implement frames (20) are arranged longitudinally displaceably in coupling members (21), the coupling members (21) are carried by the crank shafts (12) and the implement frames (20) can be driven along the coupling members (21) by means of a further crank (16) and connecting rods (17) connected thereto and the circular path of movement of the crank shafts (12) is converted into an elongated curved path of the milling prongs (19).

2. Apparatus for distributing portions of fodder from flat silos comprising a support structure (1) which can be mounted to the three-point hydraulic system or a front loader arm of an agricultural tractor and having a pronged fork (10) mounted at the lower end, a vertically displaceable, U-shaped cutting device (6) arranged above the pronged fork (10) and a milling device (13) which is arranged above the cutting device (6) and which can also be moved vertically up and down and which by means of rotating parallel crank shafts (34) carries implement frames (46) with milling prongs (47) mounted at the underside, wherein the crank shafts (34) rotate in the same direction, characterised in that a respective further crank (36) is connected by way of bearings (35) to each of both crank ends of each crank shaft (34), wherein the cranks (36) are respectively controlled by a chain drive (37) having a fixed sun wheel (38) arranged concentrically with respect to the mounting of the crank shaft (34) and a planet wheel (39) fixed to the rotating bearing journal of the crank (36), and a chain (40) passed therearound, and that the crank pins (45) of the cranks (36) of the mutually associated crank shafts (34) are coupled together by way of the implement frames (46) and that the circular path of movement of the crank shafts (34) is converted into an elongage curved path of the milling prongs (47).

3. Apparatus according to claim 1 characterised in that the crank (16) is a pivotable lever.

4. Apparatus according to claim 2 characterised in that the fixed sun wheel (38) is twice as large as the rotating planet wheel (39).

5. Apparatus according to claim 4 characterised in that the chain drive (37) is replaced by a gear drive comprising three gears.

**Revendications**

1. Appareil de répartition de portions dc fourrage prélevées dans des silages plats, composé d'un bâti (1), susceptible d'être monté sur le système hydraulique à trois points ou la bielle oscillante de chargeur avant d'un tracteur agricole, avec une fourche dentée (10) montée à l'extrémité inférieure, un dispositif de découpage en forme de U, disposé au'dessus de la fourche dentée (10), déplaçable verticalement, et un dispositif de raclage (3), disposé au-dessus du dispositif de découpage (10), également déplaçable vers le haut et vers le bas, portant, au moyen de vilebrequins rotatifs (12) parallèles, un cadre d'outil (20) avec des dents de raclage (19) montées en face inférieure, les vilebrequins (12) tournant dans le même sens, caractérisé en ce que le cadre d'outil (20) est disposé déplaçable longitudinalement dans des attelages (21) portés par les vilebrequins (12), et les cadres d'outil (20) étant susceptibles d'être entraînés le long des attelages (21), au moyen d'un vilebrequin (16) supplémentaire ainsi que de bielles (17) y étant raccordées, et la trajectoire de déplacement circulaire des vilebrequins (12) étant convertie en une trajectoire courbe lontgitudinale des dents de raclage (19).

2. Appareil de répartition de portions de fourrage prélevées dans des silages plats, composé d'un bâti (1), susceptible d'être monté sur le système hydraulique à trois points ou la bielle oscillante de chargeur avant d'un tracteur agricole, avec une fourche dentée (10) montée à l'extrémité inférieure, un dispositif de découpage en forme de U (6), disposé au-dessus de la fourche dentée (10), déplaçable verticalement, et un dispositif de raclage (13), disposé au-dessus du dispositif de découpage (6), également déplaçable vers le haut et vers le bas, portant, au moyen de vilebrequins rotatifs (34) parallèles, un cadre d'outil (46) avec des dents de raclage (47) montées en face inférieure, les vilebrequins (34) tournant dans le même sens, caractérisé en ce que, sur les deux extrémités de chaque vilebrequin (34), est raccordée une autre manivelle (36), par l'intermédiaire de paliers (35), les manivelles (36) étant chacune commandées par une transmission à chaîne (37), avec une roue planétaire fixe (38), disposée concentriquement au palier du vilebrequin (34), et une chaîne (40) entourant une roue satellite (39), fixée sur le tourillon de palier rotatif du vilebrequin (36), et que les tourillons de vilebrequin (45) des manivelles (36) des vilebrequins (34) associés entre eux sont couplés entre eux par l'intermédiaire des cadres d'outil (46), la trajectoire de déplacement circulaire des vilebrequins (34) étant convertie en une trajectoire courbe longitudinale des dents de raclage (47).

3. Appareil selon la revendication 1, caractérisé en ce que la manivelle (16) est un levier pivotant.

4. Appareil selon la revendication 2, caractérisé en ce que la roue planétaire fixe (38) est deux fois plus grande que la roue satellite mobile (39).

5. Appareil selon la revendication 5, caractérisé en ce que la transmission à chaîne (37) est remplacée par une transmission à trois roues dentées.

Fig. 1

Fig. 2

EP 0 233 340 B1

Fig.3

EP 0 233 340 B1

*Fig. 4*

Fig. 5

EP 0 233 340 B1

Fig. 6